# EUROPÄISCHE PATENTSCHRIFT

(11) **EP 4 211 035 B1**
(45) Veröffentlichungstag und Bekanntmachung des Hinweises auf die Patenterteilung: **18.03.2026**
(21) Anmeldenummer: 21777663.2
(22) Anmeldetag: 13.09.2021
(51) Int. Cl.: B63J 3/04, H02J 3/38, H02J 5/00, H02J 15/00, H02J 7/34

(54) **ENERGIESPEICHERSYSTEM EINES WASSERFAHRZEUGS**
ENERGY STORAGE SYSTEM OF A WATERCRAFT
SYSTÈME ACCUMULATEUR D'ÉNERGIE D'UNE EMBARCATION

(30) Priorität: 14.09.2020 DE 102020211491
(43) Veröffentlichungstag der Anmeldung: 19.07.2023
(60) Teilanmeldung: 26157229.1
(73) Patentinhaber: SKF Marine GmbH, 20457 Hamburg (DE)
(72) Erfinder: BARGENDE, Dirk, 25336 Elmshorn (DE); GRABBEL, Joerg, 22147 Hamburg (DE); KORTEMEIER, Sascha, 22529 Hamburg (DE)
(74) Vertreter: Kuhstrebe, Jochen
(86) Internationale Anmeldenummer: PCT/EP2021/075068
(87) Internationale Veröffentlichungsnummer: WO 2022/053668

(56) Entgegenhaltungen:
- EP-B1- 2 723 635
- WO-A1-2007/124968
- WO-A2-2005/049418
- CN-A- 110 304 228
- US-A1- 2007 077 830
- US-A1- 2012 028 516
- US-A1- 2017 298 721

## Beschreibung

Die Erfindung betrifft ein Energiespeichersystem für mindestens einen elektrischen Verbraucher in einem Bordnetz eines Wasserfahrzeugs, wobei das Energiespeichersystem mindestens einen an das Bordnetz angeschlossenen Umrichter zur Speisung des Verbrauchers aufweist.

Aus dem Stand der Technik sind Flossenstabilisatoren sowie Rudermaschinen für Passagierschiffe, größere Yachten, Schwimmpontons und dergleichen in einer großen Variationsbreite bekannt. Flossenstabilisatoren sowie Rudermaschinen arbeiten zyklisch, wobei zeitweise hohe Lastspitzen aufgrund schneller Bewegungsabläufe auftreten können, an die sich oftmals Ruhe- oder Bereitschaftsphasen mit einer minimalen Energieaufnahme anschließen. Die hohen Lastspitzen machen eine vielfach überdimensionierte Auslegung des Antriebsstrangs der Flossenstabilisatoren, der Rudermaschinen sowie des diese Verbraucher speisenden Bordnetzes notwendig.

Flossenstabilisatoren und Rudermaschinen werden üblicherweise elektrohydraulisch betrieben. Im Fall eines elektrohydraulischen Antriebsstrangs ist eine Energiespeicherung nur möglich, wenn ein hydrostatisches Getriebe als ein s.g. offener hydraulischer Kreis mit einer Stickstoff-Speicherunterstützung verwendet wird. Ein Hauptnachteil dieser Speichertechnologie ist der vergleichsweise schlechte Wirkungsgrad eines offenen hydraulischen Kreises, da hier nicht benötigte Energie in Form einer Widerstandssteuerung in Wärme abgeführt werden muss. Ein geschlossener hydraulischer Kreis sowohl für drehzahlgeregelte als auch verdrängergeregelte Systeme weist zwar im Vergleich einen hohen Wirkungsgrad auf, kann aber prinzipbedingt keinen hydraulischen Speicher nutzen.

Aus der US 2017/298721 A1 ist ein Versorgungssystem für ein Bohrschiff bekannt. Weiterer technologischer Hintergrund ist in der WO 2007/124968 A1, der CN 110 304 228 A, der US 2012/028516 A1 und der US 2007/077830 A1 offenbart.

Eine Aufgabe der Erfindung ist es, ein Energiespeichersystem für ein Bordnetz eines Wasserfahrzeugs wie ein Schiff anzugeben, so dass hohe elektrische Lastspitzen verursachende Verbraucher ohne eine Beeinträchtigung der Bordnetzstabilität betreibbar sind.

Die eingangs genannte Aufgabe wird gelöst durch ein Energiespeichersystem gemäß Anspruch 1. Insbesondere ist dabei der mindestens eine Verbraucher eine Stabilisierungseinrichtung des Wasserfahrzeugs oder eine Ruderanlage zur Kursbeeinflussung des Wasserfahrzeugs, also ein hohe Lastspitzen verursachender elektrischer Verbraucher, und dem mindestens einen Umrichter ist ein Energiespeicher zugeordnet. Der Energiespeicher erlaubt ein praktisch verzögerungsfreies Abrufen von im Höchstlastbetrieb des Verbrauchers benötigter elektrischer Energie bei der gleichzeitigen Option einer Wiederaufladung der Speichereinheit in Standby-Phasen bzw. Ruhephasen des Verbrauchers, in denen dieser das Bordnetz des Wasserfahrzeugs kaum oder gar nicht belastet. Zudem kann das Speichervermögen des Energiespeichers so groß dimensioniert werden, dass auch im Fall eines totalen Bordnetzausfalls (s.g. "black ship") noch eine Notfunktionalität des angeschlossenen elektrischen Verbrauchers für eine zumindest geringe Zeitdauer von einigen Minuten gewährleistet ist. Somit kann z.B. eine Flosse einer Stabilisierungseinrichtung in eine Ruheposition verfahren und noch mechanisch verriegelt werden. Weiterhin kann die Ruderlage eines von einer Rudermaschine angetriebenen Ruders des Wasserfahrzeugs auf eine Neutralstellung gefahren bzw. das Ruder noch einmal "durchgestellt" werden. Der Umrichter kann sowohl in Blockals auch in aufgelöster Bauweise ausgeführt sein. Insbesondere lassen sich elektrische Großverbraucher eines Wasserfahrzeugs, die hohe, solitäre Lastspitzen hervorrufen, vom Bordnetz entkoppeln.

Der Energiespeicher ist an einen Gleichspannungszwischenkreis des Umrichters angeschlossen. Hierdurch ist eine regelungstechnisch einfache Anbindung des Energiespeichers gegeben.

Bei einer technisch vorteilhaften Ausgestaltung weist der Energiespeicher mindestens einen Energiewandler und mindestens eine diesem zugeordnete Speichereinheit auf. Hierdurch ist ein modularer und leicht skalierbarer Aufbau des Energiespeichersystems gegeben.

Bevorzugt ist der Energiewandler dazu ausgebildet, einen bidirektionalen Energiefluss zu ermöglichen. Infolgedessen ist eine Umkehr des Energieflusses möglich bzw. eine verlustarme Rückspeisung von überschüssiger elektrischer Energie in das Bordnetz des Wasserfahrzeugs realisierbar.

Im Fall einer technisch günstigen Weiterbildung ist die mindestens eine Speichereinheit mit mindestens einem hochkapazitiven Kondensator gebildet. Hierdurch ergibt sich eine hohe Energiedichte der Speichereinheit bei einer geringen Wartungsintensität. Darüber hinaus weisen Kondensatoren eine hohe Zyklenfestigkeit, geringe Ansprechzeiten sowie eine hohe Lebensdauer auf. Als hochkapazitive Kondensatoren kommen beispielsweise so genannte Ultracaps bzw. Supercaps oder Doppelschichtkondensatoren in Betracht. Alternativ oder ergänzend können auch Spulen mit einer möglichst hohen Induktivität Verwendung finden.

Bei einer vorteilhaften Ausgestaltung ist vorgesehen, dass die mindestens eine Speichereinheit mit mindestens einem Schwungmassesystem, insbesondere einem Schwungrad oder dergleichen, gebildet ist. Derartige Speichereinheiten mit einem Schwungmassesystem erreichen kurze Ansprechzeiten, weisen kurzfristig nur eine vernachlässigbare Selbstentladung auf und sind unempfindlich gegen wiederholte Tiefentladungen. Weiterhin ist eine hohe Energiedichte mit Schwungmassesystemen, beispielsweise in der Form eines mit einer hohen Drehzahl von bis zu 100.000 Umdrehungen pro Minute rotierenden Schwungrades mit einer hohen Eigenmasse, realisierbar. Darüber hinaus kann gegebenenfalls aufgrund gyroskopischer Effekte zugleich eine Stabilisierungswirkung eines solchermaßen ausgerüsteten Schiffes erreicht werden.

Vorzugsweise ist das Wasserfahrzeug ein Schiff. Dadurch ist die Erfindung bei dem am häufigsten anzutreffenden Typ von Wasserfahrzeug mit einem kompakten, langestreckten Rumpf einsetzbar. Alternativ kann es sich bei dem Wasserfahrzeug auch um eine schwimmende Plattform, einen Ponton, eine Anordnung von Pontons oder dergleichen handeln.

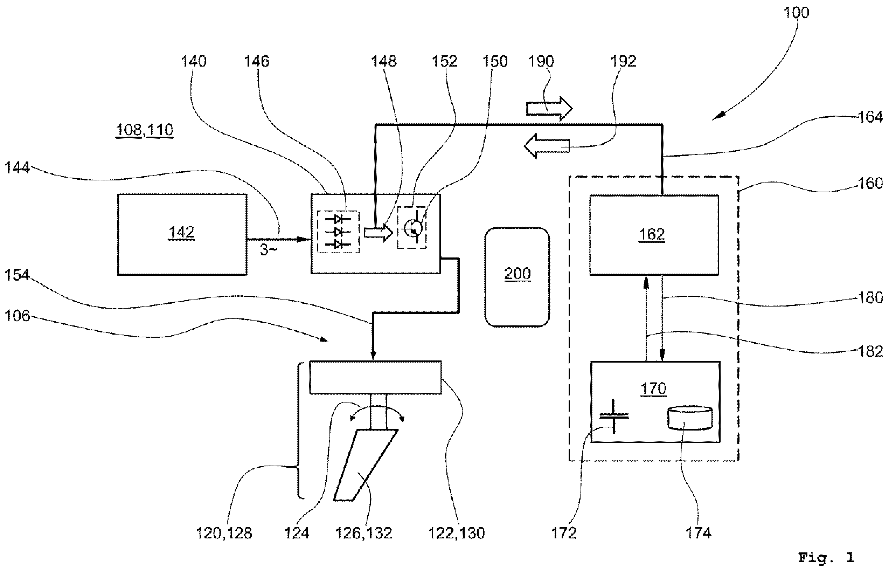

Im Folgenden wird ein bevorzugtes Ausführungsbeispiel der Erfindung anhand von schematischen Figuren näher erläutert. Die einzige Figur 1 zeigt ein schematisches Blockschaltbild eines erfindungsgemäßen Energiespeichersystems für ein Wasserfahrzeug.

Figur 1 illustriert ein schematisches Blockschaltbild eines erfindungsgemäßen Energiespeichersystems für ein Wasserfahrzeug wie ein Schiff. Ein Energiespeichersystem 100 dient beispielhaft zur Speisung eines hohe elektrische Lastspitzen verursachenden elektrischen (Groß-)Verbrauchers 106 eines Wasserfahrzeugs 108 wie einem Schiff 110 oder dergleichen. Der elektrische Verbraucher 106 ist hier lediglich exemplarisch als eine Stabilisierungseinrichtung 120 mit mindestens einer zugeordneten elektrischen Antriebseinheit 122 zum - wie mit einem schwarzen Doppelpfeil 124 angedeutet - verschwenkenden Antrieb einer Stabilisierungsflosse 126 zur Stabilisierung des zeichnerisch nicht näher dargestellten Schiffes 110 um mindestens eine Achse des Raumes ausgeführt. Weiterhin kann der elektrische Verbraucher 106 auch als eine Ruderanlage 128 mit mindestens einer Rudermaschine 130 zum Antrieb mindestens eines zugeordneten Ruders 132 zur Kursbeeinflussung des Schiffes 110 ausgebildet sein.

Das Energiespeichersystem 100 umfasst unter anderem einen Umrichter 140, der aus einem Bordenetz 142 des Schiffes 110 gespeist ist. Bei dem Bordnetz 142 handelt es sich bevorzugt um ein zeichnerisch nicht näher dargestelltes dreiphasiges Drehstromnetz mit einem Nullleiter sowie einem Schutzleiter bzw. Erde. Der Umrichter 140 ist hier lediglich beispielhaft als ein klassischer Umrichter mit einer passiven Diodenbrücke 146 zum Gleichrichten des vom Bordnetz 142 gelieferten Drehstroms 144, einem Gleichspannungszwischenkreis 148 zur Stabilisierung und einem Ausgangswechselrichter 152 aufgebaut. Der Ausgangswechselrichter 152 kann mit einer Vielzahl von Leistungsschaltern, von denen hier nur ein Leistungsschalter 150 stellvertretend für alle übrigen Leistungsschalter dargestellt ist, realisiert sein. Ausgangswechselrichter 152 ausgeführt. Bei den Leistungsschaltern kann es sich zum Beispiel um Leistungs-Bipolar-Transistoren, Leistungs-MOSFET's, IGBT's, Thyristoren, Triac's etc. handeln. Der Umrichter 140 speist über eine Versorgungsleitung 154 den elektrischen (Groß-)Verbraucher 106 mit der betriebsnotwendigen elektrischen Energie. Der detaillierte schaltungstechnische Aufbau des Umrichters 140 ist einem auf dem Gebiet der elektrischen Energietechnik tätigen Fachmann hinreichend geläufig, so dass an dieser Stelle zwecks Knappheit und Kürze der Beschreibung auf eine eingehende Erläuterung verzichtet werden kann. Anstelle von Drehstrom 144 kann das Bordnetz 142 auch Gleichstrom zur Verfügung stellen, so dass an Stelle des (Frequenz-)Umrichters 140 ein nicht dargestellter Spannungswandler bzw. ein so genannter DC-DC-Wandler erforderlich ist.

Das Energiespeichersystem 100 umfasst weiterhin einen Energiespeicher 160. Der Energiespeicher 160 weist hierbei einen Energiewandler 162 auf, der mittels einer Verbindungsleitung 164 elektrisch mit dem Umrichter 140 verbunden ist. Darüber hinaus verfügt der Energiespeicher 160 über mindestens eine zugeordnete Speichereinheit 170 zum Speichern unterschiedlicher Energieformen, wie elektrische Energie, kinetische Energie, chemische Energie oder potentielle Energie. Vorzugsweise ist der Energiespeicher 160 zum verlustarmen Speichern elektrischer Energie bestimmt.

Bei der zeichnerisch nicht näher dargestellten Speichereinheit 170 kann es sich beispielsweise um eine Vielzahl von hochkapazitiven (Einzel-)Kondensatoren handeln, die zu einer Kondensatorbatterie zusammengeschaltet sind. Von den einzelnen Kondensatoren der Kondensatorbatterie ist lediglich ein Kondensator repräsentativ für alle Übrigen mit der Bezugsziffer 172 eingezeichnet.

Um ein verlustfreies Zurückspeisen der in der Speichereinheit 170 bevorrateten Energie in den Gleichspannungszwischenkreis 148 des Umrichters 140 zu ermöglichen, ist der Energiewandler 162 dazu ausgebildet, einen bidirektionalen Energiefluss zu realisieren. Zu diesem Zweck kann der Energiewandler 162 zum Beispiel mindestens einen, zeichnerisch nicht dargestellten elektrischen Wandler bzw. einen Umrichter aufweisen. Finden Kondensatoren 172 zur Speicherung elektrischer Energie in der Speichereinheit 170 Verwendung, ist der Energiewandler 162 bevorzugt mit einem DC/DC-Wandler realisiert. Kommt hingegen ein Schwungmassespeicher bzw. das Schwungrad 174 innerhalb der Speichereinheit 170 zum Einsatz, ist der Energiewandler 162 mit einem Wechselrichter aufgebaut. Diese Schaltungsvarianten des Energiewandlers 162 gestatten den vorstehend erwähnten bidirektionalen elektrischen Energiefluss.

Ein Active-Front-End-Modul ermöglicht im Gegensatz zu einer passiven Diodenbrücke einen verlustarmen bidirektionalen Fluss elektrischer Energie innerhalb des elektrischen Wandlers im Vierquadrantenbetrieb und kann beispielsweise mit aktiv schaltbaren elektronischen Schaltern, wie zum Beispiel IGBT's, Leistungs-Bipolar-Transistoren oder Leistungs-MOSFET's realisiert sein. Ein Heizwiderstand zum Ableiten der zurückfließenden elektrischen Energie, wie er bei elektrischen Wandlern bzw. Umrichtern mit einer Diodenbrücke noch zwingend notwendig ist, entfällt. Dafür gestaltet sich die Ansteuerung eines Active-Front-End-Moduls vergleichsweise aufwändig. Soll eine Rückspeisung vom Umrichter 140 in das Bordnetz 142 möglich sein, muss die Diodenbrücke 146 im Umrichter 140 ebenfalls durch ein derartiges Active-Front-End-Modul ersetzt werden. Der detaillierte Aufbau eines solchen Wandlers mit einem Active-Front-End-Modul ist einem auf dem Gebiet der Energieelektronik tätigen Fachmann hinreichend geläufig, sodass an dieser Stelle zwecks Knappheit der Beschreibung auf eine eingehendere Erläuterung der schaltungstechnischen Details verzichtet sei.

Alternativ oder ergänzend kann die Speichereinheit 170 mindestens ein Schwungmassesystem, wie beispielsweise ein mit hoher Drehzahl rotierendes Schwungrad 174 aufweisen. Darüber hinaus kann die Speichereinheit 170 chemische Akkumulatoren mit einer möglichst hohen Energiedichte, wie zum Beispiel Lithium-Akkumulatoren oder Lithium-Polymer-Akkumulatoren aufweisen. Gegebenenfalls kann der Energiewandler 162 ergänzend oder alternativ mindestens eine Elektrolysezelle sowie mindestens eine Brennstoffzelle zur Umwandlung von elektrischer Energie in chemische Energie und umgekehrt aufweisen. Die Speichereinheit 170 kann in diesem Fall beispielsweise mit einem druckarmen Metallhydridspeicher oder mit einem Druckspeicher für unter höherem Druck stehenden Wasserstoff gebildet sein, um zumindest den von der Elektrolysezelle freigesetzten Wasserstoff dauerhaft speichern zu können.

Mit Hilfe des Energiewandlers 162 kann der Speichereinheit 170 des Energiespeichers 160 Energie zugeführt werden, die durch die Konvertierung der am Gleichspannungszwischenkreis 148 des Umrichters 140 über die Verbindungsleitung 164 abgreifbaren elektrischen Energie in eine für die Speichereinheit 170 geeignete Energieform mittels des Energiewandlers 162 gewonnen wurde. Umgekehrt kann Energie aus der Speichereinheit 170 abgezogen und mittels Rückkonvertierung durch den Energiewandler 162 in Form von elektrischer Energie über die Verbindungsleitung 164 wieder dem Gleichspannungszwischenkreis 148 des Umrichters 140 zugeführt werden. Dieser bidirektionale Prozess ist mit einem Ladepfeil 180 und einem diesem entgegengesetzt gerichteten Entladepfeil 182 veranschaulicht. Das (Auf-)Laden der Speichereinheit 170 mit einer für diese geeignete Energieform erfolgt in der Regel bis eine vollständige Aufladung der Speichereinheit 170 erreicht ist.

Erfolgt beispielsweise das Speichern von Energie innerhalb der Speichereinheit 170 mit Hilfe des Schwungrads 174, kann die darin gespeicherte kinetische Energie mit Hilfe des Energiewandlers 162 wieder in elektrische Energie zurückverwandelt und über die Verbindungsleitung 164 wieder dem Gleichspannungszwischenkreis 148 des Umrichters 140 zugeleitet werden. Dies kann zum Beispiel mit Hilfe eines im generatorischen Betrieb befindlichen Elektromotors oder eines Generators erfolgen, die in einer solchen Konstellation bevorzugt jeweils in den Energiewandler 162 integriert sind und die mittels des Schwungrads 174 mechanisch drehend sind. Umgekehrt kann elektrische Energie aus dem Gleichspannungszwischenkreis 148 des Umrichters 140 mittels des Energiewandlers 162 in kinetische Energie überführt werden, indem das Schwungrad 174 zum Beispiel mit Hilfe des Elektromotors bis zum Erreichen einer vorgegebenen Höchstdrehzahl des Schwungrads 174 drehend angetrieben wird.

Kommen hingegen in der Speichereinheit 170 beispielsweise hochkapazitive Kondensatoren zum Einsatz, erfolgt mit Hilfe des Energiewandlers 162 lediglich eine Anpassung der zugeführten oder abgeführten elektrischen Energie hinsichtlich der Stromstärke und/oder der Spannungshöhe. Ferner ist mittels des Energiewandlers 162 eine Modellierung des zeitlichen Verlaufs des Stroms und/oder der Spannung möglich. Weiterhin ist erforderlichenfalls mittels des Energiewandlers 162 eine AC-DC-Konvertierung oder umgekehrt sowie eine DC-DC-Konvertierung möglich.

In einem Normal- oder Ruhebetrieb bzw. Standby-Zustand des elektrischen (Groß-)Verbrauchers 106 wird verfügbare, aber aktuell nicht benötigte elektrische Energie aus dem Gleichspannungszwischenkreis 148 über die Verbindungsleitung 164 vorzugsweise in den Energiespeicher 160 überführt bzw. in diesen eingespeichert, was mit einem Speicherpfeil 190 veranschaulicht ist. Dieser Speichervorgang wird in der Regel bis zum Erreichen einer vollständigen Aufladung des Energiespeichers 160 fortgesetzt. Zusätzlich kann freigesetzte Bremsenergie des elektrischen (Groß-)Verbrauchers 106 in den Energiespeicher 160 eingespeichert werden (Rekuperation).

Verursacht der elektrische Verbraucher 106 hingegen eine elektrische Lastspitze oder eine hohe Dauerlast in dem Gleichspannungszwischenkreis 148, die vom Bordnetz 142 nicht vollständig oder kurzfristig abdeckbar ist, so erfolgt mittels des Energiespeichers 160 und über die Verbindungsleitung 164 unverzüglich das Zurückspeisen der fehlenden elektrischen Energie in den Gleichspannungszwischenkreis 148 des Umrichters 140 des Energiespeichersystems 100, was mit einem Rückspeicherpfeil 192 dargestellt ist. Dieser Prozess kann in Abhängigkeit von der Kapazität der Speichereinheit 170 des Energiespeichers 160 bis zu einige Minuten andauern. Infolgedessen sind kurzfristige und auch längerfristige, durch den elektrischen (Groß- )Verbraucher 106 im Bereich des Gleichspannungszwischenkreises 148 hervorgerufene elektrische Überlastzustände mit Hilfe des Energiespeichers 160 kompensierbar.

Aufgrund des erfindungsgemäßen Energiespeichersystems 100 ist es ferner nicht mehr erforderlich, das Bordnetz 142 des Wasserfahrzeugs 108 auf möglicherweise nur selten auftretende, maximale elektrische Lastspitzen des elektrischen Verbrauchers 106 auszulegen. Weiterhin ist bei einem Totalausfall des Bordnetzes 142 ("black ship") zumindest ein Notbetrieb des elektrischen Verbrauchers 106 möglich. Beispielsweise kann die Stabilisierungsflosse 126 der Stabilisierungseinrichtung 120 mit Hilfe der elektrischen Antriebseinheit 122, die in dieser Konstellation vom Energiespeicher 160 notversorgt ist, bis in eine Ruhestellung verfahren und gegebenenfalls mechanisch arretiert werden. Dasselbe gilt für die elektrische Rudermaschine 130 der Ruderlage 128 zum Antrieb des Ruders 132.

Sämtliche Abläufe innerhalb des Energiespeichersystems 100, insbesondere das Speichern und das Zurückspeichern von elektrischer Energie in oder aus der Speichereinheit 170 über den Energiewandler 162 sowie das (Auf-)Laden und das Entladen der Speichereinheit 170 des Energiespeichers 160 mit unterschiedlichen Energieformen, insbesondere in der Form von elektrischer Energie, kinetischer Energie, potentieller Energie und/oder chemischer Energie mit Hilfe des Energiewandlers 162 werden von einer leistungsfähigen elektronischen Steuer- und/oder Regeleinheit 200 kontrolliert.

Die Erfindung betrifft ein Energiespeichersystem 100 für mindestens einen elektrischen Verbraucher 106 in einem Bordnetz 142 eines Wasserfahrzeugs 108, wobei das Energiespeichersystem 100 mindestens einen an das Bordnetz 142 angeschlossenen Umrichter 140 zur Speisung des Verbrauchers 106 aufweist. Erfindungsgemäß ist dem mindestens einen Umrichter 140 ein Energiespeicher 160 zugeordnet. Hierdurch lassen sich auch hohe elektrische Lastspitzen verursachende Verbraucher 106, wie eine Stabilisierungseinrichtung 120, eine Ruderanlage 128 oder dergleichen, problemlos an einem Bordnetz 142 eines Wasserfahrzeugs 108 betreiben.

### Bezugszeichenliste

- 100: Energiespeichersystem
- 106: elektrischer Verbraucher
- 108: Wasserfahrzeug
- 110: Schiff
- 120: Stabilisierungseinrichtung
- 122: elektrische Antriebseinheit
- 124: schwarzer Doppelpfeil
- 126: Stabilisierungsflosse
- 128: Ruderanlage
- 130: elektrische Rudermaschine
- 132: Ruder
- 140: Umrichter
- 142: Bordnetz
- 144: Drehstrom
- 146: Diodenbrücke
- 148: Gleichspannungszwischenkreis
- 150: Leistungsschalter
- 152: Ausgangswechselrichter
- 154: Versorgungsleitung
- 160: Energiespeicher
- 162: Energiewandler
- 164: Verbindungsleitung
- 170: Speichereinheit
- 172: Kondensator
- 174: Schwungrad
- 180: Ladepfeil
- 182: Entladepfeil
- 190: Speicherpfeil
- 192: Rückspeicherpfeil
- 200: Steuer- und/oder Regeleinheit

## Patentansprüche

1. Energiespeichersystem (100) für mindestens einen elektrischen Verbraucher (106) in einem Bordnetz (142) eines Wasserfahrzeugs (108), wobei das Energiespeichersystem (100) mindestens einen an das Bordnetz (142) angeschlossenen Umrichter (140) zur Speisung des Verbrauchers (106) aufweist, wobei dem mindestens einen Umrichter (140) ein Energiespeicher (160) zugeordnet ist,
wobei der mindestens eine Verbraucher (106) eine Stabilisierungseinrichtung (120) des Wasserfahrzeugs (108) oder eine Ruderanlage (128) zur Kursbeeinflussung des Wasserfahrzeugs (108) ist,
**dadurch gekennzeichnet, dass** der Energiespeicher (160) an einen Gleichspannungszwischenkreis (148) des Umrichters (140) angeschlossen ist.

2. Energiespeichersystem (100) nach Patentanspruch 1, **dadurch gekennzeichnet, dass** der Energiespeicher (160) mindestens einen Energiewandler (162) und mindestens eine diesem zugeordnete Speichereinheit (170) aufweist.

3. Energiespeichersystem (100) nach Patentanspruch 1 oder 2, **dadurch gekennzeichnet, dass** der Energiewandler (162) dazu ausgebildet ist, einen bidirektionalen Energiefluss zu ermöglichen.

4. Energiespeichersystem (100) nach einem der Patentansprüche 1 bis 3, **dadurch gekennzeichnet, dass** die mindestens eine Speichereinheit (170) mit mindestens einem hochkapazitiven Kondensator (172) gebildet ist.

5. Energiespeichersystem (100) nach einem der Patentansprüche 1 bis 3, **dadurch gekennzeichnet, dass** die mindestens eine Speichereinheit (170) mit mindestens einem Schwungmassesystem, insbesondere einem Schwungrad (174) oder dergleichen, gebildet ist.

6. Energiespeichersystem (100) nach einem der Patentansprüche 1 bis 5, **dadurch gekennzeichnet, dass** das Wasserfahrzeug (108) vorzugsweise ein Schiff (110) ist.

## Claims

1. Energy storage system (100) for at least one electrical load (106) in an on-board electrical system (142) of a watercraft (108), wherein the energy storage system (100) comprises at least one converter (140), connected to the on-board electrical system (142), for supplying power to the load (106), wherein the at least one converter (140) has an energy store (160) assigned to it,
wherein the at least one load (106) is a stabilizing device (120) of the watercraft (108) or a rudder system (128) for influencing the course of the watercraft (108), **characterized in that** the energy store (160) is connected to a DC link (148) of the converter (140).

2. Energy storage system (100) according to Claim 1, **characterized in that** the energy store (160) comprises at least one energy converter (162) and at least one storage unit (170) assigned to the latter.

3. Energy storage system (100) according to Claim 1 or 2, **characterized in that** the energy converter (162) is designed to enable a bidirectional energy flow.

4. Energy storage system (100) according to one of Claims 1 to 3, **characterized in that** the at least one storage unit (170) is formed by at least one high-capacity capacitor (172).

5. Energy storage system (100) according to one of Claims 1 to 3, **characterized in that** the at least one storage unit (170) is formed by at least one rotating mass system, in particular a flywheel (174) or the like.

6. Energy storage system (100) according to one of Claims 1 to 5, **characterized in that** the watercraft (108) is preferably a ship (110).

## Revendications

1. Système d'accumulation d'énergie (100) pour au moins un consommateur électrique (106) dans un réseau de bord (142) d'une embarcation (108), le système d'accumulation d'énergie (100) possédant au moins un convertisseur statique (140) raccordé au réseau de bord (142) pour l'alimentation du consommateur (106), un accumulateur d'énergie (160) étant associé audit convertisseur statique (140),
ledit consommateur (106) étant un dispositif de stabilisation (120) de l'embarcation (108) ou un système de gouvernail (128) destiné à influencer la trajectoire de l'embarcation (108),
**caractérisé en ce que** l'accumulateur d'énergie (160) est raccordé à un circuit intermédiaire de tension continue (148) du convertisseur statique (140).

2. Système d'accumulation d'énergie (100) selon la revendication 1, **caractérisé en ce que** l'accumulateur d'énergie (160) possède au moins un convertisseur d'énergie (162) et au moins une unité d'accumulation (170) associée à celui-ci.

3. Système d'accumulation d'énergie (100) selon la revendication 1 ou 2, **caractérisé en ce que** le convertisseur d'énergie (162) est configuré pour rendre possible un flux d'énergie bidirectionnel.

4. Système d'accumulation d'énergie (100) selon l'une des revendications 1 à 3, **caractérisé en ce que** l'au moins une unité d'accumulateur (170) est formée avec au moins un condensateur à haute capacité (172).

5. Système d'accumulation d'énergie (100) selon l'une des revendications 1 à 3, **caractérisé en ce que** l'au moins une unité d'accumulateur (170) est formée avec au moins un système de masse oscillante, notamment volant d'inertie (174) ou similaire.

6. Système d'accumulation d'énergie (100) selon l'une des revendications 1 à 5, **caractérisé en ce que** l'embarcation (108) est de préférence un bateau (110).
